# EUROPEAN PATENT APPLICATION

(11) **EP 2 101 526 A1**
(43) Date of publication of application: **16.09.2009**
(21) Application number: 08004376.3
(22) Date of filing: 10.03.2008
(51) Int. Cl.: H04W 12/08, H04W 4/22, H04L 29/06

(54) **Indication of entry decisions to local networks**

(71) Applicant: Nokia Siemens Networks Oy, 02610 Espoo (FI)
(72) Inventor: Kröselberg, Dirk, 80469 München (DE)
(74) Representative: Bruglachner, Thomas E.

(57) **Abstract**

The invention concerns authentication and authorization of a mobile station (MS) in a WiMAX network, wherein information indicating a lack of authentication or authorization is transmitted in a message from a WiMAX Connectivity Service Network entity (AAA server) to an Access Network (ASN) entity (ASN-GW).

## Description

### Technical field of the invention

The invention concerns methods, networks, network entities and memory devices for authentication and authorization of a device in a network, especially in a WiMAX network.

### Background of the invention

WiMax (Worldwide Interoperability for Microwave Access) telecommunication networks as such are known from specifications available e.g. in the internet as e.g. www.wimaxforum.org and http://en.wikipedia.org/wiki/WiMAX.

The invention is related to broadband wired and wireless access networks using AAA (RADIUS or Diameter protocols based) infrastructure for network access and authorization. This includes WiMAX networks according to the specifications of the IEEE 802.16 group (http://www.ieee.org/web/ standards/home/index.html) and of the WiMAX Forum networking group (NWG).

For the latter, see [wmf_stage3]

http://www.wimaxforum.org/technology/documents/

WiMAX_Forum_Network_Architecture_Stage_2-3_Rel_1v1.2.zip and

www.wimaxforum.org.

For network access to WiMAX networks according to [wmf_stage3] the network entry procedure includes an authentication and authorization procedure that is based on AAA protocols and the EAP protocol (IETF RFC3748).

In the normal case, the MS requesting access to the WiMAX network performs via EAP an EAP authentication exchanges, uses an EAP authentication method, with the AAA server of the WiMAX CSN network that the subscriber is registered with.

After successful authentication using a so-called EAP method, the AAA server of the CSN network performs an authorization step where the authorization of the identified subscription is verified, and where the CSN performs checks whether the requested service can be granted.

Besides successful authentication/authorization, there are numerous cases where either authentication or authorization does not succeed. Examples are unauthenticated access to WiMAX networks like in the case where the MS does not provide sufficient security credentials to the initial authentication procedure but the AAA server might accept an unauthenticated entry (e.g. with an EAP method that does not authenticate the MS or subscriber side) for some specific reason. This could e.g. be due to the MS requiring initial provisioning, or due to the need to perform an emergency call where such special access must be available based on country-specific regulation.

Another case is unauthorized access, where the authentication can be performed between MS and CSN (AAA-Server), but where the CSN does not grant authorization to the MS or subscriber for standard access. Examples here would be cases where a prepaid subscription lacks sufficient credits for requested services, but some basic network services must still be available to the MS, where roaming with full services being available is not allowed to specific access or visited networks, etc.
Currently the WiMAX network architecture does not support an adequate mechanism where the CSN can indicate such lack of authorization or unauthenticated access to the local access network (ASN).

### Summary of the invention

Therefore, it is an object of the present invention to overcome these shortcomings of the prior art. This is accomplished by what is set forth in the appended independent claims, while the appended dependent claims define advantageous modifications thereof.

Specifically, according to a first aspect of the present invention according to claim 1, there is provided a method for authentication and authorization of a device in a network, especially in a WiMAX network,
wherein information (which could also be named indication information) indicating a lack of authentication or authorization is transmitted in a message from a WiMAX Connectivity Service Network entity to an Access Service Network entity.

Preferably the information is sent in a RADIUS protocol message or in a Diameter protocol message.

Preferably the message is a message that is exchanged as part of a WiMAX network attachment procedure.

Preferably the information is sent by a Connectivity Service Network Authentication, Authorization and Accounting server to an Access Service Network server to which the MS of a subscriber connects to.

Preferably a hotlining procedure and RADIUS attributes or Diameter procedures are used to carry the information in a message.

Preferably the information provided by the AAA server is used by an intermediate network entity in the AAA path as input to local policy decisions.

Preferably the intermediate network entity in the AAA path is a visited Connectivity Service Network AAA proxy/server.

Preferably a visited network decides based on the information, indicating unauthenticated or unauthorized access, to allow or not allow network access to the station.

Preferably in a RADIUS-based communication from a Connectivity Service Network Authentication, Authorization and Accounting server to an Access Service Network AAA client, a RADIUS attribute is used.

Preferably the value of the attribute is an 8-bit Unsigned Octet that is set to a preset value to indicate to the access network that insufficient authentication or authorization for the specific MS or subscriber has taken place at the AAA server.

Preferably a message from the Authentication, Authorization and Accounting server provides a reason code representing a reason which service or type of service is requested as part of the information in an additional attribute.

Preferably a reason code provided by an Authentication, Authorization and Accounting server indicates a request for emergency access.

Preferably a reason code provided by an Authentication, Authorization and Accounting server indicates service limitations.

According to a second aspect of the present invention there is provided a memory device comprising stored code means adapted to produce the steps of any one of the preceding claims when loaded into the memory of a computer.

According to a third aspect of the present invention there is provided a telecommunication network comprising
- at least one authentication and authorization entity for authentication and authorization of a station to the telecommunication network,
- an Authentication, Authorization and Accounting server entity of a WiMAX Connectivity Service Network designed to send information indicating a lack of authentication or authorization of the station to an Access Network entity.

Preferably a RADIUS protocol message comprises the information.

Preferably a Diameter protocol message comprises the information.

Preferably the message a WiMAX network attachment procedure message.

Preferably the Access Service Network server is a Access Service Network server to which the station of a subscriber connects to.

Preferably a hotlining procedure message comprises the information.

Preferably an intermediate network entity in the AAA path is designed to use the information provided by the WiMAX Connectivity Service Network entity as input to local policy decisions.

Preferably a visited network decision is based on the information indicating unauthenticated or unauthorized access to allow or not allow network access to the station.

Preferably a RADIUS-based communication from a Connectivity Service Network Authentication, Authorization and Accounting server to an Access Service Network AAA client server, comprises a RADIUS attribute representing the information.

Preferably the value of the attribute in an 8-bit Unsigned Octet is set to a preset value (e.g. 1) to indicate to the local access network that insufficient authentication or authorization for the specific MS or subscriber has taken place at the AAA server.

Preferably a message from the Authentication, Authorization and Accounting server comprises a reason code representing a reason as part of the information given in the additional attribute.

Preferably a reason code provided by an Authentication, Authorization and Accounting server indicates a request for emergency access.

Preferably a reason code provided by an Authentication, Authorization and Accounting server indicates service limitations.

The invention is applicable in cases where the WiMAX CSN network grants unauthenticated or unauthorized access for a specific reason (like for example an emergency call) and needs to inform the local access network that authorization is not sufficient for normal access.

Further aspects, features and advantages of the present invention will become more fully apparent from the claims and from the following detailed description of preferred embodiments thereof which is to be taken in conjunction with the appended drawings, in which:
Figure 1 shows a WiMAX NWG Reference Architecture according to [wmf_stage3].
Figure 2 shows message flow according to an embodiment the invention.
Figure 3 shows an embodiment of a message carrying information according to the invention.

Telecommunication networks as such are known to one skilled in the art in detail e.g. from standard specifications available e.g. in the internet (e.g. WiMAX networks are known from www.wimaxforum.org and http://en.wikipedia.org/wiki/WiMAX). Therefore details of telecommunication networks which are not very relevant for generally understanding the invention are not explained here in detail.

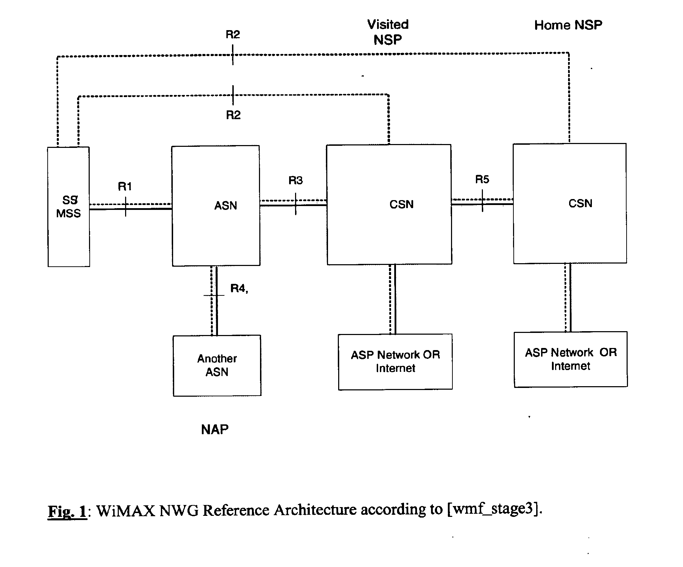

Figure 1 shows a WiMAX NWG Reference Architecture according to [wmf_stage3].
A mobile station [SSMSS] of a subscriber communicates via an air interface (R1) and a base station (not shown in Fig. 1) etc with an access service network entity ASN, the access service network entity ASN communicates via an interface R3 with a Connectivity Service Network (CSN) entity CSN of a visited network of a service provider NSP, which communicates via an interface R5 with a Connectivity Service Network (CSN) entity CSN of a home network of a service provider NSP. Further there are interfaces (via further components) R2 for communication of the station [SS/MSS] with an entity of the home network [Home NSP] and for communication of the [visited NSP] CSN entities with an ASP network or internet and for communication of the [home NSP] CSN entities with an ASP network or internet.

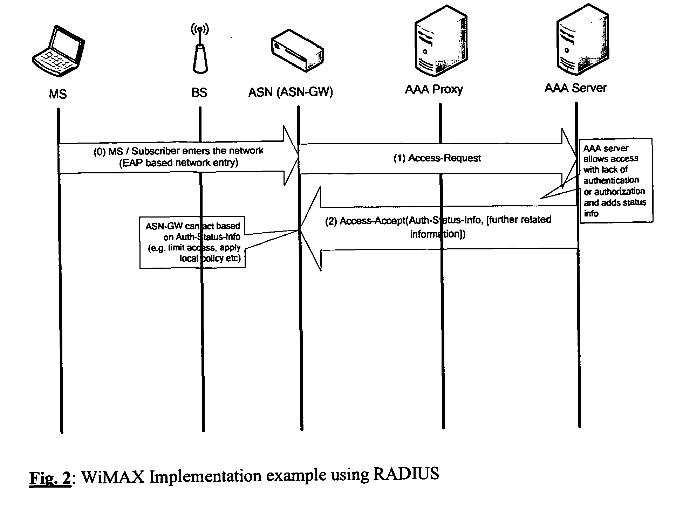

Figure 2 shows a mobile station MS (=e.g. the SS/MSS of Fig.1) communicating over an air interface with a base station BS of a WiMAX telecommunication network and with an access service network (ASN) entity (here an access network gateway ASN-GW). The mobile station tries to authenticate (e.g. an entity checks an ID provided by the MS etc) and authorize (an entity checks whether it may communicate in a visited and/or home NSP) with support of the AuthenticationAuthorization-Accounting (AAA) entities AAA Proxy (of the ASN) and AAA Server (of the CSN).

In a message (0) in Fig. 2 the mobile station MS of a subscriber announces that it (MS) enters the network with e.g. an EAP based network entry procedure. The ASN entity ASN-GW sends a message (1) with an access request (requesting access of the mobile station MS to the WiMax network and/or a service) to the AAA server.

The AAA server sends a message (2) representing an acceptance of the request (1) comprising Auth-Status-Info details representing a status of the authentication of the MS and further comprising further related information. The AS-GW can act based on Auth-Status-Info, e.g. limiting access, applying a local policy etc.

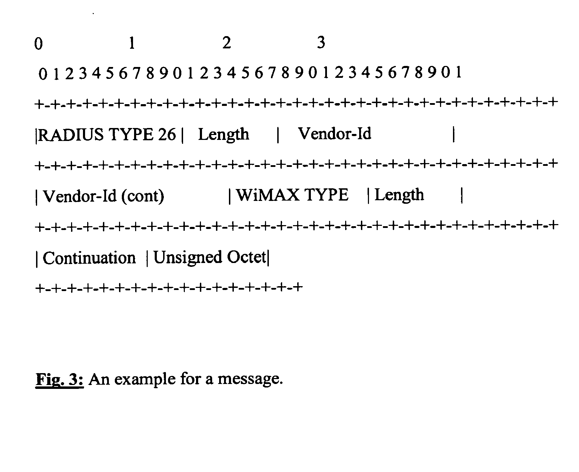

Figure 3 shows a message comprising, among other info, an "Unsigned Octet", in which information indicating a lack of authentication or authorization is transmitted in a message (Fig. 2: Nr "(2)"; Fig.3) from a WiMAX Connectivity Service Network (CSN) entity (AAA server) to an Access Network (ASN) entity (ASN-GW).

According to an embodiment of the invention, it is proposed to add a mechanism in a Connectivity Service Network CSN entity to communicate either lack of authentication or lack of authorization to the local access network (ASN). An embodiment of the invention comprises to make use of the existing AAA-based communication between AAA server in the Connectivity Service Network CSN and AAA client in the ASN (ASN-GW). This communication is based on the RADIUS or Diameter protocol.
It is proposed to add this information to the existing RADIUS or Diameter messages that are exchanged as part of the network attachment procedure in the existing WiMAX specifications.
This additional information is sent by the Connectivity Service Network CSN AAA-server to the Access Service Network ASN where the mobile station MS and subscriber are connecting to.

An alternative embodiment of the invention is to make use of existing hotlining procedure and RADIUS attributes or Diameter procedures to carry such additional information, and add the new information to the exchange of hotlining related information within RADIUS or Diameter. However, this alternative might be limited by the fact that hotlining support is only optional according to the current status of WiMAX network standardization, so general availability of hotlining might not be guaranteed.

In addition, the new information provided by the AAA server can be used by any intermediate network entity in the AAA path (e.g. a AAA proxy in a visited CSN network) and can be used as input to local policy decisions. For example, a visited network can decide based on the indication about unauthenticated or unauthorized access to allow or not allow network access.

As an embodiment of the invention for the example of RADIUS-based communication between AAA server and AAA client, a new RADIUS attribute can be created that can e.g. be defined if used for WiMAX as a WiMAX VSA (vendor specific attribute) *'Auth-Status-Info'* according to Figure 3,
where the WiMAX type needs to be allocated as a new number not yet in use, to indicate the *Auth-Status-Info.* The value of the attribute is an 8-bit Unsigned Octet in the example that is set to "1" to indicate to the local access network that insufficient authentication or authorization for the specific MS or subscriber has taken place at the AAA server, but limited access can be granted anyway for some specific reason.

As additional information, the AAA server can provide a reason code as part of the information given in the additional attribute. For this example, a reason code could indicate as one example a request for emergency access or for initial provisioning, could indicate specific service limitations etc.

The invention allows to transfer information about authentication/authorization decisions in the WiMAX CSN network.
Especially in deployments where no hotlining support is available the mechanism presented as part of the invention would allow to enable the local access network to take into account such decisions taken by the CSN network and apply the according access policies (e.g. install preconfigured filter sets to limit access to basic services like initial provisioning or emergency services only). Also, any intermediate or local CSN or ASN network will benefit from embodiments of the invention by being able to base local policy decisions on the new information.
In turn, this increases the overall security level of a WiMAX network environment.

What has been described above is what is presently considered to be a preferred embodiment of the present invention. However, as is apparent to the skilled reader, it is provided for illustrative purposes only and is in no way intended to that the present invention is restricted thereto. Rather, it is the intention that all variations and modifications be included which fall within the spirit and scope of the appended claims.

### List of abbreviations

- SS/MS:: Subscriber Station / Mobile Station
- ASN:: Access Service Network
- BS:: Base station (belongs to ASN)
- ASN-GW:: Access Service Network Gateway (belongs to ASN)
- CSN:: Connectivity Service Network
- HA:: Home Agent, belongs to CSN
- AAA:: Authentication, Authorization and Accounting (AAA Server belongs to CSN)
- NAP:: Network Access Provider
- NSP:: Network Service Provider
- WiMAX:: Worldwide Interoperability for Microwave Access
- R1.. R5, R8:: Interconnections between SS/MSS, ASN, CSNs

## Claims

1. Method for authentication and authorization of a device (SS/MS) in a network, especially in a WiMAX network (NAP, ASN, CSN),
wherein information indicating a lack of authentication or authorization is transmitted in a message (Fig. 2: Nr "(2)"; Fig.3) from a Connectivity Service Network (CSN) entity (AAA server) to an Access Network (ASN) entity (ASN-GW).

2. Method according to any of the preceding claims,
wherein the information is sent in a RADIUS protocol message or in a Diameter protocol message.

3. Method according to any of the preceding claims,
wherein the network is a WiMAX network.

4. Method according to any of the preceding claims,
wherein the message is a message (Fig. 2: Nr "(2)"; Fig.3) that is exchanged as part of a WiMAX network attachment procedure.

5. Method according to any of the preceding claims,
wherein the information is sent by a Connectivity Service Network (CSN) Authentication, Authorization and Accounting server (AAA) to an Access Service Network server (ASN, ASN-GW) to which the MS of a subscriber connects to.

6. Method according to any of the preceding claims,
wherein a hotlining procedure and RADIUS attributes or Diameter procedures are used to carry the information in a message.

7. Method according to any of the preceding claims,
wherein the information provided by the AAA server is used by an intermediate network entity in the AAA path as input to local policy decisions.

8. Method according to any of the preceding claims, wherein the intermediate network entity in the AAA path is a visited Connectivity Service Network AAA proxy/server.

9. Method according to any of the preceding claims,
wherein a visited network (Fig. 1: "Visited NSP") decides based on the information, indicating unauthenticated or unauthorized access, to allow or not allow to the station (SS/MS) a network access.

10. Method according to any of the preceding claims,
wherein in a RADIUS-based communication from a Connectivity Service Network Authentication, Authorization and Accounting server (CSN AAA) to an Access Service Network AAA client , a RADIUS attribute (WiMAX VSA (vendor specific attribute) 'Auth-Status-Info') is used.

11. Method according to any of the preceding claims,
wherein the value of the attribute is an 8-bit Unsigned Octet that is set to a preset value (1) to indicate to the access network (ASN) that insufficient authentication or authorization for the specific mobile station (MS) or subscriber has taken place at the AAA server.

12. Method according to any of the preceding claims,
wherein a message from the Authentication, Authorization and Accounting server (AAA server) provides a reason code representing a reason which service or type ofservice is requested as part of the information in an additional attribute.

13. Method according to any of the preceding claims,
wherein a reason code provided by an Authentication, Authorization and Accounting server (AAA server) indicates a request for emergency access.

14. Method according to any of the preceding claims,
wherein a reason code provided by an Authentication, Authorization and Accounting server (AAA server) indicates service limitations.

15. Memory device comprising stored code means adapted to produce the steps of any one of the preceding claims when loaded into the memory of a computer.

16. Telecommunication network (ASN, CSN, Visited NSP, Home NSP)
- especially WiMAX telecommunication network-comprising:
- at least one authentication and authorization entity (ASN, ASN-GW, AAA Proxy, AAA server) for authentication and authorization of a station (SS/MS) to the telecommunication network,
- an Authentication, Authorization and Accounting server entity (AAA server) of a Connectivity Service Network (CSN) designed to send information indicating a lack of authentication or authorization of the station (SS/MS) to an Access Network entity (ASN-GW).

17. Telecommunication network according to claim 15,
wherein a RADIUS protocol message comprises the information.

18. Telecommunication network according to any of the claims 15 to 16,
wherein a Diameter protocol message comprises the information.

19. Telecommunication network according to any of the claims 15 to 17,
wherein the message is a WiMAX network attachment procedure message.

20. Telecommunication network according to any of the claims 15 to 18,
wherein the Access Service Network server (ASN, ASN-GW) is an Access Service Network server (ASN, ASN-GW) to which the device (SS/MSS) of a subscriber connects to.

21. Telecommunication network according to any of the claims 15 to 19,
wherein a hotlining procedure message comprises the information.

22. Telecommunication network according to any of the claims 15 to 20,
wherein an intermediate network entity in the AAA path is designed to use the information provided by the WiMAX Connectivity Service Network (CSN) entity (AAA server) as input to local policy decisions.

23. Telecommunication network according to any of the claims 15 to 21,
wherein a visited network decision is based on the information indicating unauthenticated or unauthorized access to allow or not allow network access to the station (SS/MS).

24. Telecommunication network according to any of the claims 15 to 22,
wherein a RADIUS-based communication from a Connectivity Service Network Authentication, Authorization and Accounting server (CSN AAA) to an Access Service Network AAA client server (ASN-GW) comprises a RADIUS attribute (WiMAX VSA (vendor specific attribute) 'Auth-Status-Info') representing the information.

25. Telecommunication network according to any of the claims 15 to 23,
wherein the value of the attribute in an 8-bit Unsigned Octet is set to a preset value (1) to indicate to the local access network that insufficient authentication or authorization for the specific MS or subscriber has taken place at the AAA server.

26. Telecommunication network according to any of the claims 15 to 24,
wherein a message from the Authentication, Authorization and Accounting server (AAA server) comprises a reason code representing a reason as part of the information given in the additional attribute.

27. Telecommunication network according to any of the claims 15 to 25,
wherein a reason code provided by an Authentication, Authorization and Accounting server (AAA server) indicates a request for emergency access.

28. Telecommunication network according to any of the claims 15 to 26,
wherein a reason code provided by an Authentication, Authorization and Accounting server (AAA server) indicates service limitations.

29. Authentication, Authorization and Accounting server entity (AAA server) for a WiMAX Connectivity Service Network (CSN) designed to send information indicating a lack of authentication or authorization of a station (SS/MS) to an Access Network entity (ASN-GW).
